# EUROPEAN PATENT SPECIFICATION

(11) **EP 3 875 928 B1**
(45) Date of publication and mention of the grant of the patent: **05.07.2023**
(21) Application number: 20160885.8
(22) Date of filing: 04.03.2020
(51) Int. Cl.: G01J 1/04, G01J 1/42, G01J 1/02, G01J 5/04, G01J 5/06, G02B 7/00, G01J 5/12, G01J 5/061, G01J 5/0803

(54) **TRANSPARENT DOME FOR A PYRANOMETER**
TRANSPARENTE KUPPEL FÜR EIN PYRANOMETER
DÔME TRANSPARENT POUR UN PYRANOMÈTRE

(43) Date of publication of application: 08.09.2021
(73) Proprietor: OTT HydroMet B.V., 2628 XH Delft (NL)
(72) Inventor: NIEUWVEEN, Robertus Dennis, 2628 XH Delft (NL); STAUPE, Ilja Xander, 2628 XH Delft (NL); KOREVAAR, Marc Albert, 2628 XH Delft (NL)
(74) Representative: Müller-Boré & Partner Patentanwälte PartG mbB

(56) References cited:
- WO-A1-2016/140565
- JP-A- S62 179 776
- US-A1- 2004 211 892
- García Rosa Delia ET AL: "Description of the Baseline Surface Radiation Network (BSRN) station at the Izaña Observatory (2009-2017): measurements and quality control/assurance procedures", Geoscientific Instrumentation, Methods and Data Systems, vol. 8, no. 1, 13 February 2019 (2019-02-13), pages 77-96, XP055917291, DOI: 10.5194/gi-8-77-2019
- Eko Instruments Co. Ltd: "EKO Instruction Manual Pyrheliometer MS56 Ver.1", , 5 August 2011 (2011-08-05), pages 1-26, XP055917296, Retrieved from the Internet: URL:n/a

## Description

### Technical Field

The present invention relates to the technical field of the devices and methods for measuring the solar irradiance. In particular, the present invention relates to a pyranometer comprising a transparent dome and a method of measuring a solar irradiance with a pyranometer.

### Background

As commonly known, a pyranometer is an instrument for measuring the solar irradiance on a planar surface, for example a ground surface. Pyranometers are used in conjunctions with other systems or technologies, among others solar simulators and photovoltaic systems for the calculation of photovoltaic module effective power and system performance. Consequently, the measurement accuracy of a pyranometer is one outmost aspect of this measuring instrument.

Known pyranometers are usually grouped in two different categories, according to the working principle for the measurement of the solar irradiance, namely thermopile-based sensor pyranometers and silicon semiconductor-based pyranometers.

In a thermopile-based sensor pyranometer, the solar irradiance is measured by a sensor based on thermopiles and designed to measure the broad band of the solar radiation flux density from a 180° field of view angle. The thermopile-based sensor is usually arranged below a first transparent dome and an optional second outer transparent dome. The transparent dome(s) limits the spectral response from 190 to 4000 nanometers, particularly from 300 to 2,800 nanometers, preserves the 180° field of view and protects the thermopile-based sensor from the external environment.

During use, the transparent dome may be covered by a layer of dew or frost, especially during the early hours of a day, just before the sunrising. A layer of dew or frost may potentially prevent a large amount of solar radiation to reach the thermopile-based sensor. Additionally, a layer of frost or dew may also reflect a substantial amount of the solar radiation in a direction opposite to the thermopile-based sensor. Consequently, in the presence of dew or frost, the solar irradiance measured by the pyranometer may not correspond to the effective solar irradiance that may be measured in absence of a dew/frost layer.

In order to prevent the formation of a dew or frost layer, the pyranometer may be heated. By heating the pyranometer it is possible to defrost the transparent dome, thereby resulting in a more precise measuring of the solar irradiance.

A known heated pyranometer may comprise a ventilation unit that may be coupled to the pyranometer main body (see for example the "CVF4 ventilation unit", produced by Kipp & Zonen B.V.). More particularly, the ventilation unit particularly comprises an electric fan being arranged close to a heating element. Accordingly, the ventilation unit allows diffusing a warm air over the pyranometer body, particularly in the space above the outer dome. The warm air diffused by the ventilation unit defrosts the transparent dome.

However, the use of a ventilation unit may cause a temperature offset in the pyranometer. In other words, the temperature measured by the sensor may be greater than the effective temperature that may be measured in absence of the additional heating. Therefore, this offset that results from heating the pyranometer, reduces the measurement accuracy.

Document WO 2016/140565 A1 describes a pyranometer comprising a housing, a sensor located into the housing, an inner and an outer window both overlying the sensor. An internal heating member is provided for transferring heat to the housing and to the inner and outer window such that the deposition of moisture and/or ice is prevented.

Document JP S62 179776 describes a photovoltaic generator including a heating element.

Document US 2004/211892 A1 describes a window mounting system for optical sensors including a removable connection for window replacement, an alignment system to assure precision registration of the window or dome with the sensor internal optics, and thermal insulation to limit heat transfer from the window to the optics housing and to the sensor.

### Summary

It is an object of the present invention to provide a pyranometer for measuring the solar irradiance characterized by a high measurement accuracy. More particularly, it is an object of the present invention to provide a heated pyranometer whose efficiency is not affected by weather conditions, for example by the formation of dew or frost layer, while maintaining a high measurement accuracy.

The achievement of this object in accordance with the invention is set out in the independent claims. Further developments of the invention are the subject matter of the dependent claims.

According to the claimed invention, the arrangement of a heating element to thermally contact at least a portion of the transparent dome allows to efficiently remove any layer of dew and/or frost that may cover the transparent dome especially during early hours, just before the irradiance appears. Accordingly, if any layer of dew and/or frost is removed from the transparent dome, a greater amount of solar radiation will reach the sensor for measuring the solar irradiance, thus leading to a more accurate measuring of the solar irradiance. Additionally, the temperature offset that arises in heated pyranometers is reduced/annul. Accordingly, the above transparent dome solves the technical problem of enhancing the measurement accuracy of the pyranometer.

According to an embodiment, the heating element may comprise a printed circuit board (PCB). A printed circuit board (PCB) advantageously enhances the heating efficiency of the transparent dome and/or advantageously allows to substantially uniformly heat the transparent dome, thereby leading to an increase in the measurement accuracy of the pyranometer.

According to an embodiment, the heating element may have a substantially annular overall shape. According to a further embodiment the heating element may comprises at least one resistive element.

According to the claimed invention, the thermal insulating element arranged to contact at least a portion of the heating element advantageously allows to thermally insulate the heating element from the other components of the pyranometer, for example the thermopile-based sensor. This particularly prevents the heat produced by the heating element, to be transferred to the other components of the pyranometer, resulting in an offset condition. In other words, the thermal insulating element advantageously minimizes the signal offset, that is preventing the offset on the measurement signal to becomes excessive, due to the additional heating generated by the heating elements. Advantageously, the measurement accuracy of the pyranometer is enhanced.

Moreover, the claimed at least one mounting element advantageously prevents the formation of thermal bridges between the heating element and the other components of the pyranometer, thereby preventing a transfer of heat to the other components of the pyranometer. Advantageously, the measurement accuracy of the pyranometer is enhanced.

In a further embodiment, the pyranometer may further comprise at least one sensor for detecting solar irradiance, wherein the sensor is thermally decoupled from the transparent dome and/or the heating element by means of at least one thermal insulating element.

In a further particular embodiment, the pyranometer may further comprise a controller configured to control a heating output of the heating element. The controller may be preferably configured to control the heating output of the heating element based on a solar irradiance measured by the pyranometer.

A controller configured to regulate a heating output of the heating element, e.g. turning on/off the heating element and/or increasing/decreasing the heating output, particularly allows to heat the transparent dome before the sun appears (when there is not irradiance), and to switch off the heating element, when the transparent dome has been already defrosted, and during the sunrising while the pyranometer starts to measure the solar irradiance. Advantageously, this reduces the offset generated by the additional heating while the pyranometer is measuring the solar irradiance. Accordingly, the measurement accuracy of the pyranometer is enhanced.

In a further embodiment, the controller may be configured to increase the heating output of the heating element when the solar irradiance measured by the pyranometer exceeds a first specified (predetermined or predeterminable) solar irradiance threshold. The controller may be also configured to decrease the heating output of the heating element when the solar irradiance measured by the pyranometer exceeds a second specified (predetermined or predeterminable) solar irradiance threshold. Optionally, the first specified solar irradiance threshold may be equal to the second specified solar irradiance threshold.

In a further embodiment, the controller may be configured to calculate a solar irradiance offset value based on a control parameter of the heating element and to modify a solar irradiance measured by the pyranometer, on the basis of a calculated solar irradiance offset value. Additionally, the controller may be configured to calculate the solar irradiance offset value, based on the control parameter of the heating element, when the solar irradiance measured by the pyranometer exceeds a third specified (predetermined or predeterminable) solar irradiance threshold and/or the controller may be configured to modify a solar irradiance based on a calculated solar irradiance offset value when the solar irradiance is measured by the pyranometer exceeds a fourth specified (predetermined or predeterminable) solar irradiance threshold.

Accordingly, the controller may tune/vary the heating output of the heating element during the night hours while calculate an offset value of the solar irradiance based on the heating output of the heating element. Additionally, the controller may be configured to determine, based on the magnitude of the offset value, whether a correction of the solar irradiance may be needed during the day hours. If necessary, the controller may be configured to calculate the magnitude of this correction, namely the magnitude of the solar irradiance value. The controller may modify/correct the solar irradiance to include the offset value during the day hours in order to provide an accurate value of the solar irradiance particularly taking into account the heat generated by the heating element. Advantageously, an improvement of the measurement accuracy is obtained.

In a further embodiment, the pyranometer may further comprise at least one temperature sensor operatively connected to the controller, wherein the temperature sensor may be configured to measure a temperature of the transparent dome. The controller may be configured to calculate or determine a solar irradiance offset (value) based on the temperature of the transparent dome and to modify a solar irradiance measured by the pyranometer, on the basis of the solar irradiance offset.

According to this embodiment, the temperature sensor may be used to only measure the dome temperature and the controller may correct the solar irradiance measured by the pyranometer, in order to obtain a zero-offset condition. This adjustment/correction method for correcting the solar irradiance may be applied without heating the transparent dome by means of the heating element. Accordingly, an improvement of the measurement accuracy is obtained by correcting the solar irradiance measured by the pyranometer, considering a difference in temperatures between the thermopile-based sensor and the temperature of the transparent dome.

In a further embodiment, the pyranometer may further include a temperature sensor operatively connected to the controller, wherein the temperature sensor is configured to measure a temperature of the transparent dome. The controller may be configured to control the heating output of the heating element such that the measured temperature of the transparent dome exceeds a specified (predetermined or predeterminable) threshold temperature. Alternatively or additionally, the controller may be configured to control the heating output of the heating element such that a measured temperature difference between the temperature of the transparent dome and a temperature measured by a sensor of the pyranometer remains substantially constant.

The controller may be configured to control the heating output of the heating element so as to maintain the transparent dome to a specified, pre-determined or predeterminable, temperature; and/or to maintain a substantially constant temperature difference, between the temperature of the transparent dome and the temperature measured by a sensor of the pyranometer, for example a thermopile-based sensor.

Preferably, the temperature threshold may correspond to the temperature measured by the thermopile-based sensor. Therefore, the controller may be configured to control the heating output of the heating element, that is increasing/decreasing the heating output, such that the temperature of the transparent dome substantially corresponds (is equal to) to the temperature measured by the thermopile-based sensor. This allows to eliminate or significantly reduce any offset due, for example, to the cooling or heating of transparent dome. Advantageously, the measurement accuracy is enhanced.

A further aspect of the present invention relates to a method of measuring or determining a solar irradiance with a pyranometer as set forth in the appended independent method claim.

In a particular embodiment, the method of measuring a solar irradiance with a pyranometer may comprise measuring a solar irradiance; and controlling the heating output of the heating element. The method may further comprise controlling the heating output of the heating element based on a solar irradiance measured by the pyranometer. More particularly, the method may comprise: increasing the heating output of the heating element if a solar irradiance measured by the pyranometer exceeds a first specified (predetermined or predeterminable) solar irradiance threshold; and/or decreasing the heating output of the heating element if a solar irradiance measured by the pyranometer exceeds a second specified (predetermined or predeterminable) solar irradiance threshold.

According to a further embodiment, the method of measuring a solar irradiance with a pyranometer may comprise calculating a solar irradiance offset based on a control parameter of the heating element, and modifying the solar irradiance on the basis of the calculated solar irradiance offset.

In a further embodiment, the method of measuring a solar irradiance with a pyranometer may comprise calculating a solar irradiance offset based on the heating output of the heating element when a solar irradiance measured by the pyranometer exceeds a third specified (predetermined or predeterminable) solar irradiance threshold; and modifying the solar irradiance on the basis of the calculated solar irradiance offset signal when a solar irradiance measured by the pyranometer exceeds a fourth specified (predetermined or predeterminable) solar irradiance threshold.

Further particularly, the method of measuring a solar irradiance with a pyranometer may comprise measuring a temperature of the transparent dome; calculating an offset value based on the temperature of the transparent dome; and modifying a solar irradiance on the basis of the solar irradiance offset. Alternatively, the method of measuring a solar irradiance with a pyranometer may further comprise measuring a temperature of the transparent dome and heating the transparent dome such that the measured temperature of the transparent dome exceeds a specified (predetermined or predeterminable) temperature threshold.

Further particularly, the method of measuring a solar irradiance with a pyranometer may comprise measuring a temperature of the transparent dome and heating the transparent dome such that a temperature difference between the temperature of the transparent dome and a temperature measured by a sensor of the pyranometer, for example a thermopile-based sensor, remains substantially constant.

### Brief Description of the Drawings

Details of exemplary embodiments are set forth below with reference to the exemplary drawings. Other features will be apparent from the description, the drawings, and from the claims. It should be understood, however, that even though embodiments are separately described, single features of different embodiments may be combined to further embodiments.
Figure 1 depicts an exploded axonometric view of a transparent dome for a pyranometer;
Figure 2 depicts an axonometric view of the transparent dome illustrated in Figure 1, in an assembled state;
Figure 3 depicts a cross-sectional side view of the transparent dome illustrated in Figure 1;
Figure 4 depicts a detailed view of the transparent dome illustrated in Figure 3;
Figure 5 depicts an axonometric view of a heating element;
Figure 6 depicts a plan view of the heating element illustrated in Figure 5;
Figure 7 depicts an exploded axonometric view of a pyranometer comprising the transparent dome illustrated in Figures 1 to 4;
Figure 8 depicts an axonometric view of the pyranometer illustrated in Figure 7, in an assembled state;
Figure 9 depicts a cross-sectional side view of the pyranometer illustrated in Figure 8;
Figure 10 depicts a detailed view of the transparent dome illustrated in figure 9.

### Detailed Description

In the following, a detailed description of examples will be given with reference to the drawings. It should be understood that various modifications to the examples may be made. Unless explicitly indicated otherwise, elements of one example may be combined and used in other examples to form new examples.

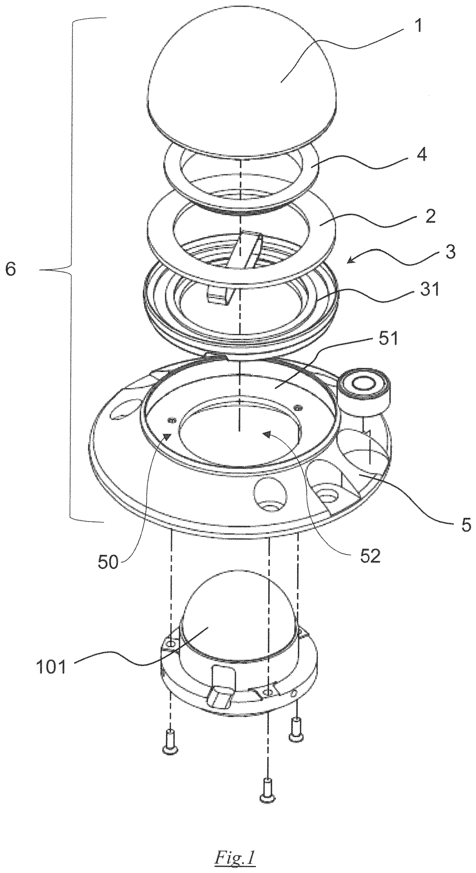

Fig. 1 illustrates a transparent dome 1 for a pyranometer according to an embodiment of the present invention. In the same figure the transparent dome 1 is depicted to comprise, that is together with, a heating element 2, a mounting element 4, a thermal insulating element 3 and a supporting structure 5. The foregoing components are connected to each other to form an assembly indicated, in its entirety, with the numerical reference 6. Particularly, the assembly 6 comprises the transparent dome 1, the heating element 2, the mounting element 4, the thermal insulating element 3 and the support structure 5.

Referring to Figs. 1 to 4, the transparent dome 1 of the pyranometer is illustrated as being an outer transparent dome for a pyranometer 100. In other words, when mounted on the pyranometer 100, the transparent dome 1 forms the outermost dome 1 of the pyranometer. If the transparent dome 1 is an outer transparent dome 1 mounted on the pyranometer 100, an outer surface 10 of the transparent dome 1 substantially faces an environment 13 external to the pyranometer 100, while an inner surface 11 of the transparent dome 1 substantially faces an inner closed space 14 of the pyranometer 100.

In this configuration, the pyranometer may optionally comprise at least a second inner transparent dome 101, which may be mounted in an inner closed space 14 of the pyranometer 100 and may be covered by, that is enclosed, in the outer transparent dome 1. However, while the present description and the drawings illustrate a transparent dome 1 as an outer transparent dome, the present disclosure may be applied to an inner transparent dome of a pyranometer. In other words, the transparent dome 1 may also be an inner transparent dome for a pyranometer.

In summary, the transparent dome 1 may be a single (sole) outer transparent dome, an outer transparent dome in a pyranometer comprising a second inner transparent dome, or an inner transparent dome 1 in a pyranometer provided with a second outer transparent dome.

The transparent dome 1 is configured to allow a solar radiation to pass through the dome 1. Particularly, the transparent dome 1 may be a dome configured to limit the spectral response from 190 to 4000 nanometers (nm), preferably from 300 to 2,800 nanometers, while preserving the 180° field of view. The transparency of the transparent dome 1 particularly may be such that at least about 60%, more particularly at least about 70% of the incident light in the relevant spectral range may pass therethrough. In other words, the transparent dome 1 is configured to allow a solar radiation to be transmitted from the environment 13 external to the pyranometer 100 to the inner closed space 14, through the outer surface 10, through the material forming the transparent dome 1 and though the inner surface 11 of the transparent dome 1,. In the inner closed space 14 of the pyranometer 100, the solar radiation can be measured by means of a series of components that will be hereafter described in more details.

The above described configuration of the transparent dome 1 is substantially the same, either the transparent dome 1 is an outer transparent dome, either the transparent dome 1 is an inner transparent dome. Accordingly, the transparent dome 1 may be made of any suitable transparent material that allows the transmission of a solar radiation therethrough. Particularly, the transparent dome 1 may be made of a material having such physical/chemical characteristics so as to protect the measurement surface of the pyranometer 100 yet at the same time being transparent to (most) of the solar irradiance. For example, the transparent dome 1 may be made of glass. Alternatively, the transparent dome 1 may be made of a transparent thermoplastic polymeric material, i.e. poly(methyl methacrylate) (PMMA) also known as acrylic, acrylic glass, or plexiglass.

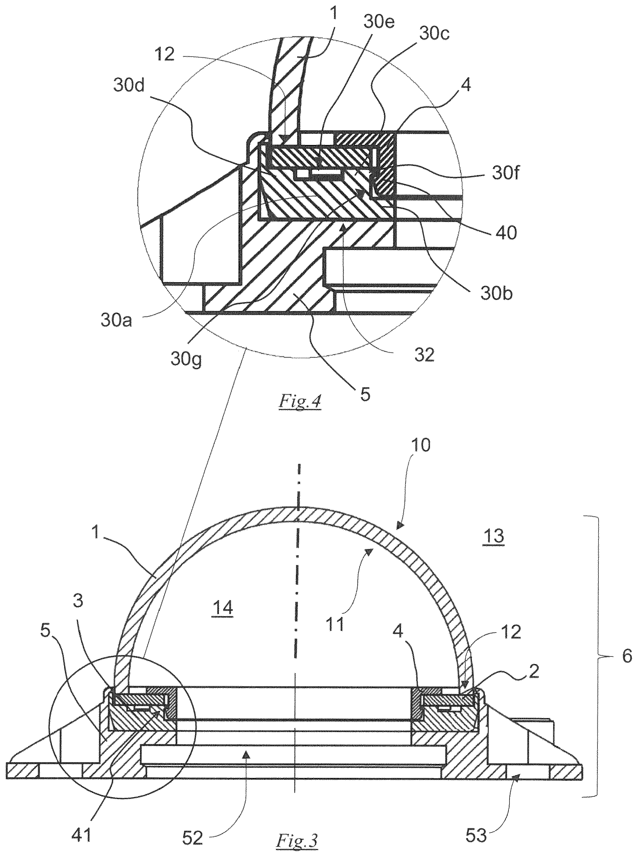

Referring to Figs. 1 and 4, the transparent dome 1 may be dome-shaped. Particularly, the transparent dome 1 may have a substantially semi-spherical hollow shape. The transparent dome 1 may comprise the outer surface 10 and the inner surface 11, wherein the inner surface 11 is opposite to the outer surface 10. Stated differently, when the transparent dome 1 is mounted on a pyranometer 100, the outer surface 10 is exposed (faces) to an environment 13 external to the pyranometer 100. In contrast, the inner surface 11 is exposed (faces) to an inner closed space 14 of the pyranometer 100. The outer surface 10 and the inner surface 11 may be preferably shaped to have a have a substantially semi-spherical hollow shape. The transparent dome 1 comprises an edge 12. The edge 12 may be a perimetric edge substantially forming the rim of the dome. The edge 12 may have preferably a substantially annular shaped surface. More particularly, a difference between the external radius, that is the radius of the outer surface 10, and the internal radius, that is the radius of the inner surface 11, substantially corresponds the thickness of the transparent dome 1.

The transparent dome 1 comprises (is provided with), at least one heating element 2. The heating element 2 is arranged to thermally contact at least a portion of the transparent dome 1 so as to heat the transparent dome 1 by contact. In other words, due to the arrangement of the heating element 2, an amount of heat can be transferred by thermal conduction, from the heating element 2 to the transparent dome 1, when the heating element 2 is switched on.

As illustrated in Fig. 4, the heating element 2 is arranged to substantially directly contact and, thus, to thermally contact, the entire surface of the edge 12 of the transparent dome 1. This arrangement advantageously allows a substantially uniform heating of the transparent dome 1, thus preventing certain areas of the transparent dome 1 not to be effectively heated by the heating element 2. Alternatively, the heating element 2 may be configured to be simultaneously in contact with the edge 12 and with at least a portion of the outer surface 10 and/or the inner surface 11.

Advantageously, the transparent dome 1 can be kept clean from dew and frost that may occur in early morning (just before the appearance of the irradiance) thereby improving the measurement accuracy of the pyranometer.

According to an embodiment, a method for measuring a solar irradiance with a pyranometer 100 is provided. The pyranometer 100 is provided with the transparent dome 1 above described, wherein the transparent dome 1 can be heated by means of a heating element 2 arranged to thermally contact at least a portion of the transparent dome 1 so as to heat the transparent dome 1 by contact. Thus, a more accurate measurement of the solar irradiance measured by the pyranometer can be obtained

With reference to Figs. 3 to 6, the heating element 2 may particularly have a substantially annular or ring-shaped overall shape. Referring to Fig. 4, the heating element 2 may substantially have a quadrilateral-shaped cross-section.

The heating element 2 comprises a heating element outer surface 21 and a heating element inner surface 22 being opposite to the heating element outer surface 21. When arranged to thermally contact the transparent dome 1, the annular or ring-shaped heating element outer surface 21 may be in contact with the whole edge 12 of the transparent dome 1. Preferably, a width 20 of the heating element 2 (the width of an annular sector) may be substantially equal or greater than the lateral width of the (perimetric) edge 12

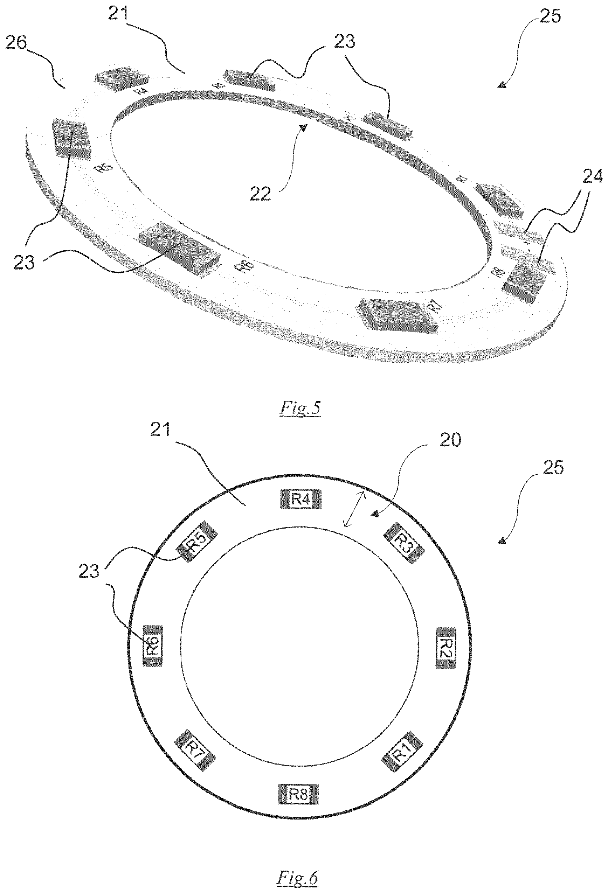

With reference to Figs. 5 and 6, according to an embodiment, the heating element 2 may comprise at least one printed circuit board (PCB) 25. Preferably, the printed circuit board (PCB) 25 may be a heated printed circuit board. More preferably, the printed circuit board may be made of a metallic material. More preferably, the metallic material may be a metallic material having a thermal conductivity equal or greater than 1 (W/(mK)). For example, the metallic material may be one of a copper-based alloy or an aluminium-based alloy. The printed circuit board (PCB) 25, in particular the main annular body 26, may be heated by at least one resistive element 23 (R1 to R8), wherein the at least one resistive element 23 may be at least partly embedded and/or arranged on the main annular body. The resistive element 23 e.g. may be a 1R6 (1.6 Ohm) type resistor. The printed circuit board may particularly comprise a plurality of resistive elements 23, wherein the resistive elements are preferably substantially evenly arranged on one surface and/or along the extension of the printed circuit board. For example, the plurality of resistive elements 23 may be arranged on the heating element outer surface 21 to be substantially evenly distributed around an axis of symmetry of the heating element 2. For example, if the plurality of resistive elements 23 comprises eight resistive elements 23, an angle between each couple of consecutive resistive elements 23 may be substantially equal to 45°. As depicted in Fig. 5, the resistive elements 23 may be reciprocally connected in series and may comprise a couple of electrical connectors 24. The electrical connectors or connecting elements 24 allow the resistive elements 23 to be connected to an electrical source (not illustrated).

The use of a printed circuit board (PCB) 25 enhances the heating efficiency of the transparent dome, in particular resulting in a uniform heating of the transparent dome, thereby leading to an increase in the measurement accuracy of the pyranometer.

The pyranometer further comprises at least one thermal insulating element 3. The thermal insulating element 3 has an annular shape. Alternatively, the thermal insulating element 3 may have a ring or arc shape.

An exemplary cross section of the thermal insulating element 3 is below described with reference to Fig. 4. Particularly, the cross section of the thermal insulating element 3 may comprise a main portion 30a particularly substantially having a quadrilateral-shape.

A first inner lateral protruding portion 30b and a second inner lateral protruding portion 30f of the thermal insulating element 3 may substantially protrude in inward direction from a lateral inner surface of the main portion 30a. The lateral inner surface of the main portion may be a surface that, when the thermal insulating element 3 is connected to the transparent dome 1, substantially face the inner closed space 14 defined by the transparent dome 1.

At least one inner lateral groove 30g is formed in the thermal insulating element 3 between the first inner lateral protruding portion 30b and a second lateral inner protruding portion 30f. The inner lateral groove 30g may substantially face the inner closed space 14 defined by the transparent dome 1, when the thermal insulating element 3 is connected to the transparent dome 1,

A first upper protruding portion 30c and a second upper protruding portion 30d may protrude upwardly from a thermal insulating element outer surface 31. The second upper protruding portion 30d may be L-shaped. At least one groove 30e may be formed between the first upper protruding portion 30c and the second upper protruding portion 30d.

The thermal insulating element 3 may comprise a thermal insulating element inner surface 32, being opposite to the thermal insulating element outer surface 31. The thermal insulating element outer surface 31 may substantially correspond to a surface of the main portion 30a, wherein the first upper protruding portion 30c and the second upper protruding portion 30d protrude from.

As illustrated in Fig. 4, the thermal insulating element 3 is to be arranged to contact a first surface of the heating element 2 so as to thermally insulate said surface of the heating element 2. More particularly, when the heating element 2 and the thermal insulating element 3 are mounted together, the thermal insulating element outer surface 31 may contact the heating element inner surface 22 so as to thermally insulate the heating element inner surface 22 of the heating element 2. In other words, the thermal insulating element outer surface 31 may form a supporting surface for the heating element 2, when the thermally insulate element 3 and the heating element 2 are mounted together.

As illustrated in Fig. 4, due to the shape of the thermal insulating element 3, in particular for the arrangement of the protrusion portions 30b, 30c, 30d and 30f, the thermal insulating element 3 allows to thermally insulate the heating element 2 from the other component forming the pyranometer 100.

For example, the supporting structure 5, when assembled to the transparent dome 1, the heating element 2, the thermal insulating element 3 and the mounting element 4, is thermally insulated from the above components. In other words, the heat transferred from the heating element 2 to the transparent dome 1 is not transferred to the supporting structure 5 and to the other components of the pyranometer 100, due to the arrangement of the thermally insulating element 3. Moreover, when the above mentioned components are mounted on the pyranometer 100, wherein the pyranometer comprises at least one sensor for detecting solar irradiance 104, for example a thermopile-based sensor, the sensor 104 is thermally decoupled from the transparent dome 1 and/or the heating element 2 by means of at least one thermal insulating element 3.

The thermal insulating element 3 may be made of a thermally isolating material. A thermally isolating material may be a material that is configured to prevent, or at least reduce a heat transfer (i.e., the transfer of thermal energy between objects of differing temperature) between objects in thermal contact. Preferably, the thermal insulating element 3 may be made of thermoplastic polymer.

A thermal insulating element 3, in particular the thermal insulating element outer surface 31 is arranged to contact at least a portion of the heating element 2. This allows to insulate the heating element 2 from the other components of the pyranometer, for example the thermopile-based sensor. This prevents the heat produced by the heating element 2, to be transferred to the other components of the pyranometer, thereby resulting in an offset condition. In other words, the thermal insulating element 3 minimizes the signal offset, that is preventing the offset on the measurement signal to become excessive, due to the additional heating that occurs in any pyranometer provided with additional heating elements. Accordingly, the measurement accuracy of the pyranometer is enhanced.

The pyranometer further comprise a mounting element 4.

As illustrated in Fig. 4, the mounting element 4 has an annular or ring shape. The cross-section of the mounting element 4 is substantially L-shaped. A protruding portion 40, preferably a tooth-shaped protruding portion, protrudes from an outer lateral surface 41 of the mounting element 4. The outer later surface 41 is a lateral surface of the mounting element 4 substantially facing outwardly from the mounting element 4.

Particularly, the protruding portion 40 has a shape that is complementary to the shape of the inner lateral groove 30g provided on the thermal insulating element 3. This allows the mounting element 4 to be mounted on the thermal insulating element 3 while clamping the heating element 2 there between. In other words, when the transparent dome 1, the heating element 2, the thermal insulating element 3 and the mounting element 4 are assembled together, the heating element 2 is enclosed between the thermal insulating element 3 and the mounting element 4, and the transparent dome 1.

The mounting element 4 may be made of a metallic material or a thermoplastic polymeric material. For example, the mounting element 4 may be made of Aluminum alloy.

The mounting element 4 allows to join the heating element 2 to the transparent dome 1 without using any traditional joining element/system, e.g. glue or screws. The mounting element 4 advantageously prevent the formation of thermal bridges between the heating element 2 and the other components of the pyranometer, thereby preventing a transferred of heat to the other components of the pyranometer 100. Accordingly, the measurement accuracy of the pyranometer is enhanced.

The transparent dome 1, the heating element 2, the thermal insulating element 3 and/or the mounting element 4 may be mounted on a support structure 5. The support structure 5 may have an annular shape. In other words, the support structure 5 may be ring-shaped.

Referring to Fig. 1, the support structure 5 may comprise at least one circular shaped groove 50 defining an annular shaped surface 51 configured to support the assembly 6 formed by the transparent dome 1, the heating element 2, the thermal insulating element 3 and the mounting element 4. Additionally, the support structure 5 may comprise at least one through opening 52. When the assembly 6 and the support structure 5 is mounted on a pyranometer 100, the other components of the pyranometer 100 may be arranged in the space below the transparent dome 1 through the through opening 52. For example, if the pyranometer 100 comprises a second inner transparent dome 101, the second inner transparent dome 101 may be arranged below the inner surface 11 of the outer transparent dome 1, through the opening 52. Additionally, the support structure 5 may comprise a plurality of through holes 53 for mounting the support structure 5 to a pyranometer 100, in particular to a main body structure 102 of the pyranometer 100. The support structure 5 may be joined to the main body structure 102 of the pyranometer 100, by means of one or more mechanical joining elements, i.e. screws 103.

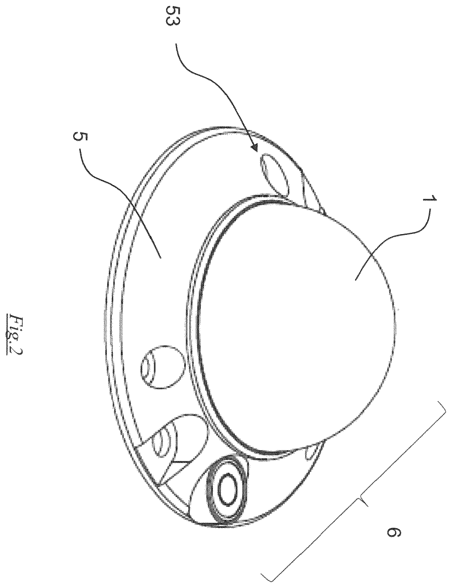

Referring to Figs. 1 and 2, the thermally insulating element 3 may be lock joined or interlocked to the support structure 5 by pressing or fitting the thermally insulating element 3 into the circular shaped groove 50, For example, the thermally insulating element 3 may be pressed by means of a press. Accordingly, the dimensions and the tolerances of the circular shaped groove 50 and the thermally insulating element 3 may be chosen such that these parts can be only mounted by using a press. One assembled, the thermally insulating element 3 abuts the annular shaped surface 51 of the support structure 5. Subsequently, the heating element 2 is placed on the thermally insulating element 3 and clamped to the thermally insulating element 3 by the mounting element 4. Particularly, the mounting element 4 may be mounted on the thermal insulating element 3 while clamping the heating element 2 therebetween. The mounting element 4 may be also pressed at least partly into the circular shaped groove 50 e.g. by means of a press. Finally, the transparent dome 1 may be mounted on or fixed to the heating element 2 by means of an adhesive.

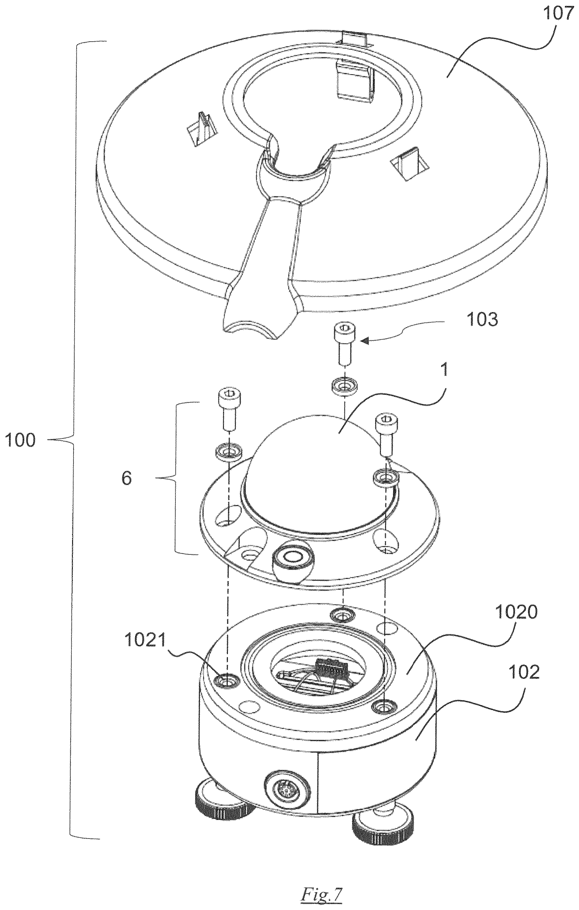

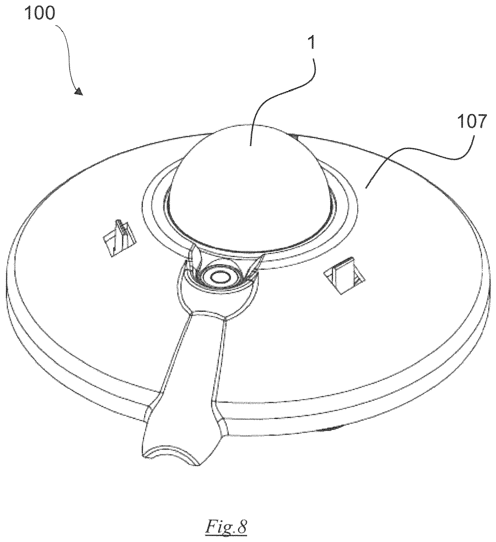

With reference to Figs. 7 to 10, an exemplary pyranometer 100 comprising the transparent dome 1 according to the embodiment e.g. of Figs. 1 to 4is illustrated. The pyranometer 100 particularly is a thermopile-based pyranometer. While the present description and drawings relate to a thermopile pyranometer, the transparent dome 1 may be provided to any other known type of pyranometers, for example with a photovoltaic pyranometer and/or photodiode-based pyranometer.

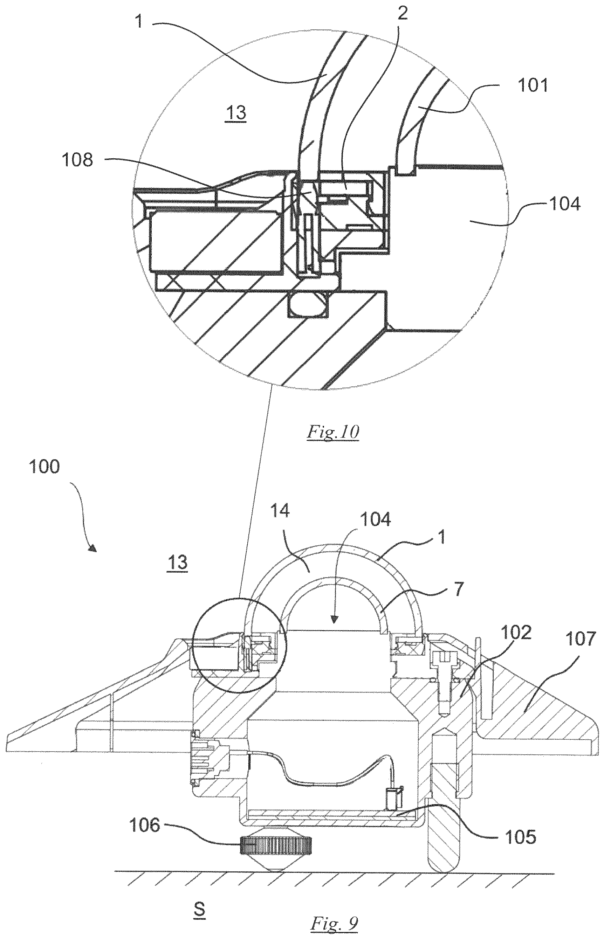

The pyranometer 100 may additionally comprise a main body 102 and at least one sunscreen carter 107. The main body 102 may be or comprise a container or enclosure configured to contain the components forming the pyranometer 100, specifically a sensor 104 or a controller 105, as shown e.g. in figure 9.

The main body 102 comprises a top surface 1020. On the top surface 1020 a plurality of dead holes 1021 may be provided. The plurality of holes 1021 allows the assembly 6 to be removably mounted on the main body 102 of the pyranometer 100. The main body 102 may be provided with one or more levelling feet 106 for supporting the main 102 e.g. on a ground surface S.

Referring to Figure 9, the pyranometer 100 may comprise at least one sensor 104 for measuring the solar irradiance. The sensor 104 may be arranged in the main body 102, particularly in the space 14 below the second inner transparent dome 101. The second inner transparent 101 may be arranged in the space 14 below the inner surface 11 of the transparent dome 1.

The controller 105, for example a microcontroller, may be operatively connected to the sensor 104. The sensor 104 may be a sensor for measuring the solar irradiance, for example a thermopile-based sensor 104. The controller 105, based on a signal provided by the solar irradiance sensor 104 (sensor for measuring the solar irradiance), may measure or determine a solar irradiance and output a solar irradiance value.

The controller 105 may be further configured to control a heating output of the heating element 2. In other words, the amount of heat generated by the heating element 2 and transferred, by contact, to the transparent dome 1, may be controlled by the controller 105. For example, the controller 105 may turn-on (switch-on) or turn-off (switch-off) the heating element 2. Additionally, the controller 105 may increase or decrease the amount of heat generated by the heating element 2, thus increasing or decreasing the amount of heat transferred, by contact, to the transparent dome 1. Accordingly, the controller 105 is operatively connected to the heating element 2.

For example, if the heating element 2 comprises a printed circuit board (PCB) 25 comprising one or more resistive elements 23, the heating output of the heating element 2 may be controlled by controlling the current intensity supplied to the resistive elements 23, through the electrical connectors 24. Stated differently, the controller 105 may be configured to control the current supplied to the resistive elements 23, thus tuning the heating output of the heating element 2.

According to an embodiment, the controller 105 may be configured to control the heating output of the heating element 2 based on a solar irradiance measured by the pyranometer 100. More particularly, the controller 105 may be configured to control (particularly by switching-on, switching-off and/or increasing or decreasing) the heating output of the heating, particularly based on the magnitude of the solar irradiance measured by the pyranometer 100.

A controller 105 configured to regulate a heating output of the heating element 2, i.e. turning on/off the heating element 2 or increasing/decreasing its heating output, advantageously allows to heat the transparent dome 1 e.g. before the sunrise (namely when there is no solar irradiance), and to switch off the heating element 2 after the defrosting of the transparent dome 1 and/or during/after the sunrise when the pyranometer starts to measure or measures the solar irradiance. This allows to reduce the offset signal generated by the additional heating while the pyranometer is measuring the solar irradiance. Accordingly, the measurement accuracy of the pyranometer is enhanced.

More particularly, according to a first example, the controller 105 may be configured to increase the heating output of the heating element 2 when a solar irradiance measured by the pyranometer 100 exceeds, that is below, a first specified solar irradiance threshold S1. The first specified solar irradiance threshold S1 may be a predetermined or predeterminable. For example, the first specified solar irradiance threshold S1 may be predetermined as being substantially equal to a null magnitude of the solar irradiance (zero solar irradiance measured), for example during the night hours when the no solar irradiance is measured by the pyranometer 100.

Alternatively, the first specified solar irradiance threshold S1 may be determined if a null magnitude of the solar irradiance (zero solar irradiance is measured by the pyranometer) is measured by the pyranometer 100, by means of the sensor 104, wherein the sensor 104 is operatively connected to the controller 105. In other words, the first specified solar irradiance thresholds S1 may substantially corresponds to a condition when a null, that is a zero amount of solar irradiance, is measured by the pyranometer 100, for example during the night hours.

Accordingly, if the solar irradiance measured by the pyranometer 100 is below the first specified solar irradiance thresholds S1 that corresponds to (or is considered to be) a null magnitude of solar irradiance (zero solar irradiance measured), the controller 105 may switch-on the heating element 2. The controller 105 may be also provided with a timer (not illustrated), that may also control the time when the heating element 2 is switched-on (or the time lapse during which the heating element 2 is maintained switched-on), while no solar irradiance is measured by the pyranometer 100. Additionally, the controller 105 may be configured to increase the amount of the heating output of the heating element 2 after the heating element 2 has been switched-on.

Accordingly, a method of measuring a solar irradiance with a pyranometer 100 comprises a phase of measuring a solar irradiance, for example by means of the sensor 104 and by the controller 105, and a phase of controlling the heating output of the heating element 2. Preferably, the controlling of the heating output of the heating element 2 may be based on a solar irradiance measured by the pyranometer 100.

Additionally, if a solar irradiance measured by the pyranometer 100 exceeds a first specified solar irradiance threshold S1 as above described (particularly is below a null value of the solar irradiance, zero solar irradiance measured), the method comprises a step of increasing the heating output of the heating element 2, i.e. switching-on the heating element 2, is performed.

The above described configuration and method of controlling the heating element, may be performed during the night hours, when no solar irradiance is measured, and preferably just before the sunrising. Specifically, by switching-on and, optionally increasing the heating output of the heating element, before the sun rising, it is possible to heat the transparent dome 1 before the beginning of a solar irradiance measuring by the pyranometer. Accordingly, by heating the transparent dome 1 before the beginning of the solar irradiance measuring, any dew or frost layer that may cover the outer surface 10 of the transparent dome 1 may be reduced or removed, thus improving the measurement accuracy of the pyranometer 100, especially during early day hours, namely when the sun appears and rises.

According to a second example, the controller 105 may be also configured to decrease the heating output of the heating element 2 when a solar irradiance measured by the pyranometer 100 exceeds, that is above, a second specified solar irradiance threshold S2. A second specified solar irradiance threshold S2 may be predetermined or predeterminable. For example, the second specified solar irradiance threshold S2 may be predetermined as being substantially equal to a null magnitude of the solar irradiance (zero solar irradiance measured), for example during the night hours when the no solar irradiance is measured by the pyranometer 100. Alternatively, the second specified solar irradiance threshold S2 may correspond to a certain specified amount/magnitude of solar irradiance, that is a positive value of solar irradiance measured by the pyranometer 100 (during the day hours).

Alternatively, the second specified solar irradiance threshold S2 may be predeterminable if a null magnitude of the solar irradiance (zero solar irradiance is measured by the pyranometer) is measured by the pyranometer 100, by means of the sensor 104, the sensor 104 being operatively connected to the controller 105. Further alternatively, the second specified solar irradiance threshold S2 may be determined if a specified amount/magnitude of solar irradiance is measured by the pyranometer 100 by means of the sensor 104 operatively connected to the controller 105. In other words, the second specified solar irradiance thresholds S2 may substantially correspond to a condition when a zero amount of solar irradiance is measured by the pyranometer 100, for example during the night hours, or when a certain specified low amount/magnitude of solar irradiance is measured by the pyranometer. In the former case (zero solar irradiance is measured by the pyranometer), the second specified solar irradiance thresholds S2 may substantially correspond, that is equal, to the first specified solar irradiance thresholds S1.

Accordingly, if the solar irradiance measured by the pyranometer 100 is above the second specified solar irradiance threshold S2 that corresponds to a null magnitude of solar irradiance (zero solar irradiance measured) or is above to a certain amount/magnitude of solar irradiance, the controller 105 may decrease the heating output of the heating element 2. Additionally, the controller 105 may be further configured to switching-off the heating element 2, if the solar irradiance exceeds a second specified solar irradiance threshold S2. The controller 105 may be also provided with a timer (not illustrated), that may also control the switching-off of the heating element 2.

According to the above described second exemplary configuration of the controller 105, a method of measuring a solar irradiance with a pyranometer 100 comprises a phase of measuring a solar irradiance, for example by means of the sensor 104 and by the controller 105, and a phase of controlling the heating output of the heating element 2. Preferably, the controlling of the heating output of the heating element 2 may be based on a solar irradiance measured by the pyranometer 100. Additionally, if a solar irradiance measured by the pyranometer 100 exceeds (is above of) a second specified solar irradiance threshold S2 as above described, a step of decreasing the heating output of the heating element 2 (particularly switching-off the heating element 2) is performed.

The above described configuration and method of measuring the solar irradiance, may be performed during after the heating element 2 has been switched on in order to remove any dew or frost layer that may cover the outer surface 10 of the transparent dome 1. More particularly, during the sun rising, the heating output of the heating element 2 may be decreased and/or the heating element 2 may be switched-off in order to reduce and, preferably annul, a signal offset that may be caused by heating the transparent dome 1. Advantageously, an improvement of the measurement accuracy is obtained.

The controller 105 may be also configured to calculate a solar irradiance offset value based on a control parameter of the heating element 2. For example, the control parameter of the heating element 2 may be the current intensity or the power supplied to the heating element 2, if the heating element is for example a printed circuit board 25. In other words, based on the magnitude of the control parameter of the heating element 2, the controller 105 may calculate a solar irradiance offset value to be added/sum or subtract/deduct from the solar irradiance measured by the pyranometer 100. Accordingly, the controller 105 may be configured to modify the solar irradiance measured by the pyranometer 100, on the basis of a calculated solar irradiance offset value based on the control parameter of the heating element 2. In other words, the controller 105 corrects the measured solar irradiance on the basis of the offset previously calculated and based on a control parameter of the heating element 2.

For example, the ontroller 105 may calculate an offset value based on the heating power applied to the heating element 2, wherein the offset value takes into account the increase of temperature due to the heating element 2. Based on this offset value, the controller may modify the solar irradiance (specifically reduce the value of the solar irradiance measured) thus providing a correct measurement of the solar irradiance.

This configuration of the controller 105, allows to correct the solar irradiance measured by the pyranometer taking into account the additional heating, and thus an increased temperature, that arises when the transparent dome 1 is heated by the heating element 2. Accordingly, the measurement accuracy of the pyranometer is improved.

Specifically, the controller 105 may be configured to calculate the solar irradiance offset value based on the control parameter of the heating element 2, when the solar irradiance measured by the pyranometer 10 exceeds, that is below, a third specified solar irradiance threshold S3. A third specified solar irradiance threshold S3 may be predetermined or predeterminable. For example, the third specified solar irradiance threshold S3 may be predetermined as being substantially equal to a null magnitude of the solar irradiance (zero solar irradiance measured), for example during the night hours when the no solar irradiance is measured by the pyranometer 100. Alternatively, the third specified solar irradiance threshold S3 may be determined if a null magnitude of the solar irradiance (zero solar irradiance is measured by the pyranometer) is measured by the pyranometer 100, by means of the sensor 104, the sensor 104 being operatively connected to the controller 105. In other words, the third specified solar irradiance thresholds S3 may substantially corresponds to a condition when a null, that is a zero amount of solar irradiance, is measured by the pyranometer 100, for example during the night hours.

Accordingly, when the solar irradiance measured by the pyranometer s below a third specified solar irradiance threshold S3 (null solar irradiance) for example during night hours, the controller 105 may be configured to switch-on the heating element 2 and/or increase/decrease the heating output of the heating element 2. While tuning the heating output of the heating element 2, the controller 105 may be configured to calculate the solar irradiance offset value based on the control parameter of the heating element 2, as above described.

Additionally, by monitoring the solar irradiance offset, the controller 105 may be configured to determine if, in view of the increased amount of temperature in the pyranometer only due to the heating element 2 (during the night hours, due to the lack of solar irradiance, the increase of the temperature only depends on the heating element 2), a correction of the solar irradiance during the day hours is needed if the heating element 2 is then working. In other words, the controller 105 can calculate the amount of the temperature increase in the pyranometer 100 and/or may be configured to determine whether, based on the magnitude of the temperature increasing, a correction of the solar irradiance is needed. If a correction is needed, the controller 105 may be configured to modify a solar irradiance based on a calculated solar irradiance offset value as above described, when the solar irradiance measured by the pyranometer 100 exceeds, that is above, a fourth specified solar irradiance threshold S4, for example during day hours. The fourth specified solar irradiance threshold S4 may be predetermined or predeterminable. According to an example, the fourth specified solar irradiance threshold S4 may be predetermined as being substantially equal to a null magnitude of the solar irradiance (zero solar irradiance measured), for example during the night hours when the no solar irradiance is measured by the pyranometer 100 or to a certain (positive) specified amount/magnitude of solar irradiance, namely when a positive value of solar irradiance is measured by the pyranometer 100 during day hours.

Alternatively, the fourth specified solar irradiance threshold S4 may be determined if a null magnitude of the solar irradiance (zero solar irradiance is measured by the pyranometer) is measured by the pyranometer 100, by means of the thermopile-based sensor 104 operatively connected to the controller 105.

Still alternatively, the fourth specified solar irradiance threshold S4 may be determined if a specified amount/magnitude of solar irradiance is measured by the pyranometer 100, by means of the sensor 104 operatively connected to the controller 105. In other words, the fourth specified solar irradiance thresholds S4 may substantially correspond to a condition when a null, that is a zero amount of solar irradiance, is measured by the pyranometer 100, for example during the night hours, or when the a certain specified amount/magnitude of solar irradiance is measured by the pyranometer. If the fourth specified solar irradiance threshold S4 correspond to a condition when a null amount of solar irradiance is measured, the fourth specified solar irradiance thresholds S4 may substantially correspond, that is equal, to the first specified solar irradiance thresholds S3.

According to the above described exemplary configuration of the controller 105, a method of measuring a solar irradiance with a pyranometer 100 may further comprise a phase of calculating a solar irradiance offset based on the heating output of the heating element 2 when a solar irradiance measured by the pyranometer 10 exceeds (is below of) a third specified solar irradiance threshold S3; and a phase of modifying the solar irradiance on the basis of the calculated solar irradiance offset signal when a solar irradiance measured by the pyranometer 10 exceeds (is above) a specified fourth specified solar irradiance threshold S4.

According to the above described configuration and method of measuring the solar irradiance, the controller 105 may tune/vary the heating output of the heating element 2 during the night hours while particularly calculating an offset value of the solar irradiance based on the heating output of the heating element 2.

Additionally, the controller may be configured to determine, based on the magnitude of the offset value, whether a correction of the solar irradiance may be needed during the day hours. If necessary, the controller is configured to calculate the magnitude of this correction, namely the magnitude of the solar irradiance value. Finally, the controller 105 may modify/correct the solar irradiance to include the offset value during the day hours in order to provide a correct value of the solar irradiance, particularly taking into account the heat generated by the heating element 2. Accordingly, an improvement of the measurement accuracy is obtained.

In a further exemplary configuration of the pyranometer 100, the pyranometer may comprise at least one temperature sensor 108 as illustrated in detailed in figure 10. The temperature sensor 108 may be arranged in contact with the edge 12 of the transparent dome 1, in order to measure the temperature of at least a portion of the transparent dome 1. The temperature sensor 108 may be alternatively arranged in contact with the inner surface 11 of the transparent dome 1. The temperature sensor 108 may be or comprise a thermocouple and/or an optical-based temperature sensor.

The temperature sensor 108 may be operatively connected to the controller 105 in order to provide to the controller 105 the temperature value of at least a portion of the transparent dome 1.

The controller 105 may be configured to modify a solar irradiance measured by the pyranometer 100 based on a temperature of the transparent dome 1 as measured by the temperature sensor 108. More particularly, the controller 105 may be configured to calculate an offset value of the solar irradiance based on the temperature value of the transparent dome 1, measured by the temperature sensor 108. For example, the magnitude of the solar irradiance offset value may depend on a difference in temperatures of the sensor 104, particularly a thermopile-based sensor, and the transparent dome 1. Accordingly, the controller 105 may be configured to modify a solar irradiance on the basis of the solar irradiance offset, particularly being based on the temperature of the transparent dome 1.

According to the above described exemplary configuration of the microcontroller 105, a method of measuring a solar irradiance with a pyranometer 100 may further comprise a phase of measuring a temperature of the transparent dome; a phase of calculating an offset value based on the temperature of the transparent dome; and a phase of modifying a solar irradiance on the basis of the solar irradiance offset.

According to the above described configuration and method of measuring the solar irradiance, the temperature sensor may be used to only measure the dome temperature and to make a correction of the solar irradiance measured by the pyranometer in order to obtain a condition of zero offset. This adjustment/correction method for correcting the solar irradiance may be applied also in a condition without heating the transparent dome 1 by means of the heating element 2. Accordingly, an improvement of the measurement accuracy is obtained by correcting the solar irradiance measured by the pyranometer, particularly by considering a difference in temperatures between the sensor, particularly a thermopile-based sensor, and the temperature of the transparent dome.

In a further exemplary configuration of the pyranometer 100, the pyranometer may comprise at least one temperature sensor 108 as illustrated in detailed in Figure 10. The temperature sensor 108 may be arranged in contact with the edge 12 of the transparent dome 1, in order to measure the temperature of at least a portion of the transparent dome 1. The temperature sensor 108 may be alternatively arranged in contact with the inner surface 11 of the transparent dome 1. The temperature sensor 108 may be a thermocouple or an optical-based temperature sensor. The temperature sensor 108 may be operatively connected to the controller 105 in order to provide to the controller 105, the temperature value of at least a portion of the transparent dome 1. According to this exemplary configuration, the controller 105 may be configured to control the heating output of the heating element 2 such that the measured temperature of the transparent dome 1 exceeds a specified threshold temperature T1.

In other words, the controller 105 may be configured to control the heating output of the heating element 2 so as to maintain the transparent dome 1 to a specified (predetermined or predeterminable) temperature T1. Preferably, the temperature threshold T1 may correspond to the temperature measured by the sensor 104, particularly a thermopile-based sensor. Alternatively or additionally, the controller 105 may be configured to control the heating output of the heating element 2 such that a measured temperature difference between the temperature of the transparent dome 1, measured by the sensor 108, and a temperature measured by the solar irradiance sensor 104 of the pyranometer 100 remains substantially constant.

Consequently, the controller 105 may be configured to control, thus regulating, the heating output of the heating element 2 (increasing/decreasing the heating output), such that the temperature of the transparent dome 1 corresponds to the temperature measured by the sensor 104, particularly a thermopile-based sensor, thereby eliminating any offset for example due to the transparent dome cooling or heating. According to the present exemplary configuration, the offset following the heating of the transparent dome 1 or due to the cooling of the transparent dome 1, may be eliminated by heating the transparent dome 1 so as the temperature of the transparent dome 1 substantially corresponds to the temperature of the thermopile-based sensor 104. Accordingly, the measurement accuracy is improved.

According to the above described exemplary configuration of the controller 105, a method of measuring a solar irradiance with a pyranometer 100 may further comprise a phase of measuring a temperature of the transparent dome 1, heating the transparent dome 1 such that the measured temperature of the transparent dome 1 exceeds a specified temperature threshold T1. According to a further exemplary configuration, of the controller 105, a method of measuring a solar irradiance with a pyranometer 100 may further comprise a phase of measuring a temperature of the transparent dome 1, and heating the transparent dome 1 such that a temperature difference between the temperature of the transparent dome 1 and a temperature measured by a sensor 104 of the pyranometer 100 remains substantially constant.

## Claims

1. A pyranometer (10) comprising a transparent dome (1), the transparent dome (1) comprising a heating element (2) arranged to directly contact the entire surface of the edge (12) of the transparent dome (1) so as to thermally contact at least a portion of the transparent dome (1) and heat the transparent dome (1) by contact, the pyranometer (10) further comprising at least one annular-shaped thermal insulating element (3) mounted on a support structure (5) and arranged to contact at least a portion of the heating element (2) so as to thermally insulate said at least one portion of the heating element (2), the thermal insulating element (3) including an inner lateral groove (30g) substantially facing the inner closed space (14) defined by the transparent dome, and the pyranometer (10) further comprising an annular shaped mounting element (4), the mounting element (4) including a protruding portion (40) protruding from an outer lateral surface (41) of the mounting element (4), the outer lateral surface (41) substantially facing outwardly from the mounting element (4), and the mounting element (4) having a substantially L-shaped cross-section, and wherein the protruding portion (40) has a shape that is complementary to a shape of the inner lateral groove (30g) such that the mounting element (4) is mounted on the thermal insulating element (3) while clamping the heating element (2) therebetween, the heating element (2) being enclosed between the thermal insulating element (3), the mounting element (4), and the transparent dome (1) such that heat transferred from the heating element (2) to the transparent dome (1) is not transferred to the support structure (5).

2. The pyranometer (10) according to claim 1, wherein the heating element (2) comprises a printed circuit board (PCB).

3. The pyranometer (10) according to any one of the preceding claims, wherein the heating element (2) has a substantially annular overall shape, and/or wherein the heating element (2) comprises at least one resistive element (23).

4. The pyranometer (10) according to any one of the preceding claims, further comprising at least one sensor (104) for detecting solar irradiance, wherein the sensor (104) is thermally decoupled from the transparent dome (1) and/or the heating element (2) by means of the at least one thermal insulating element (3).

5. The pyranometer (10) according to any one of the preceding claims, further comprising a controller (5), wherein the controller is configured to control a heating output of the heating element (2), wherein the controller (5) is configured to control the heating output of the heating element (2) based on a solar irradiance measured by the pyranometer (10), wherein the controller (105) is configured to increase the heating output of the heating element (2) when the solar irradiance measured by the pyranometer (100) exceeds a first specified solar irradiance threshold (S1); and/or wherein the controller (105) is configured to decrease the heating output of the heating element (2) when the solar irradiance measured by the pyranometer (100) exceeds a second specified solar irradiance threshold (S2), wherein the first specified solar irradiance threshold (S1) is equal to the second specified solar irradiance threshold (S2).

6. The pyranometer (100) according to any one of the preceding claims, wherein the controller (105) is configured to calculate a solar irradiance offset value based on a control parameter of the heating element (2), and to modify a solar irradiance measured by the pyranometer (100), on the basis of a calculated solar irradiance offset value; wherein the controller (105) is configured to calculate the solar irradiance offset value based on the control parameter of the heating element (2), when the solar irradiance measured by the pyranometer (10) exceeds a third specified solar irradiance threshold (S3); and wherein the controller (5) is configured to modify a solar irradiance based on a calculated solar irradiance offset value when the solar irradiance is measured by the pyranometer (10) exceeds a fourth specified solar irradiance threshold (S4).

7. The pyranometer (10) according to any one of the preceding claims, further comprising at least one temperature sensor (108) operatively connected to the controller (105), wherein the temperature sensor (108) is configured to measure a temperature of the transparent dome (1); wherein the controller (5) is configured to calculate a solar irradiance offset based on the temperature of the transparent dome (1), and to modify a solar irradiance measured by the pyranometer (100) on the basis of the solar irradiance offset.

8. The pyranometer (10) according to any one of the preceding claims, further comprising a temperature sensor (108) operatively connected to the controller (105), wherein the temperature sensor (108) is configured to measure a temperature of the transparent dome (1); and wherein the controller (5) is configured to control the heating output of the heating element (2) such that the measured temperature of the transparent dome (1) exceeds a specified threshold temperature (T1), and/or wherein the controller (5) is configured to control the heating output of the heating element (2) such that a measured temperature difference between the temperature of the transparent dome (1) and a temperature measured by a sensor (104) for detecting solar irradiance remains substantially constant.

9. Method of measuring a solar irradiance with a pyranometer (100) comprising a transparent dome (1), the method comprising:
heating the transparent dome (1) by means of a heating element (2), wherein the heating element (2) is arranged directly contact the entire surface of the edge (12) of the transparent dome (1) so as to thermally contact at least a portion of the transparent dome (1) and heat the transparent dome (1) by contact, the pyranometer (10) further comprising at least one annular-shaped thermal insulating element (3) mounted on a support structure (5) and arranged to contact at least a portion of the heating element (2) so as to thermally insulate said at least one portion of the heating element (2), the thermal insulating element (3) including an inner lateral groove (30g) substantially facing the inner closed space (14) defined by the transparent dome, and the pyranometer (10) further comprising an annular shaped mounting element (4), the mounting element (4) including a protruding portion (40) protruding from an outer lateral surface (41) of the mounting element (4), the outer lateral surface (41) substantially facing outwardly from the mounting element (4), and the mounting element (4) having a substantially L-shaped cross-section, and wherein the protruding portion (40) has a shape that is complementary to a shape of the inner lateral groove (30g) such that the mounting element (4) is mounted on the thermal insulating element (3) while clamping the heating element (2) therebetween, the heating element (2) being enclosed between the thermal insulating element (3), the mounting element (4), and the transparent dome (1) such that heat transferred from the heating element (2) to the transparent dome (1) is not transferred to the support structure (5).

10. The method of measuring a solar irradiance with a pyranometer (100) according to claim 9, further comprising:
measuring a solar irradiance; and
controlling the heating output of the heating element (2), wherein controlling the heating output of the heating element (2) is based on a solar irradiance measured by the pyranometer (10),
increasing the heating output of the heating element (2) if a solar irradiance measured by the pyranometer (100) exceeds a first specified solar irradiance threshold (S1); and/or
decreasing the heating output of the heating element (2) if a solar irradiance is measured by the pyranometer exceeds a second specified solar irradiance threshold (S2).

11. The method of measuring a solar irradiance with a pyranometer (100) according to any one of claims 9 to 10, further comprising:
calculating a solar irradiance offset based on a control parameter of the heating element (2);
modifying the solar irradiance on the basis of the calculated solar irradiance offset;
calculating a solar irradiance offset based on the heating output of the heating element (2) when a solar irradiance measured by the pyranometer (10) exceeds a third specified solar irradiance threshold (S3); and
modifying the solar irradiance on the basis of the calculated solar irradiance offset signal when a solar irradiance measured by the pyranometer (10) exceeds a specified fourth specified solar irradiance threshold (S4).

12. The method of measuring a solar irradiance with a pyranometer (100) according to any one of claims 9 to 11, further comprising:
measuring a temperature of the transparent dome (1);
calculating an offset value based on the temperature of the transparent dome (1); and
modifying a solar irradiance on the basis of the solar irradiance offset; or
comprising:
measuring a temperature of the transparent dome (1), and
heating the transparent dome (1) such that
the measured temperature of the transparent dome (1) exceeds a specified temperature threshold (T1); and/or
a temperature difference between the temperature of the transparent dome (1) and a temperature measured by a sensor for detecting solar irradiance (104) of the pyranometer (100) remains substantially constant.

## Patentansprüche

1. Ein Pyranometer (10), umfassend eine transparente Kuppel (1), wobei die transparente Kuppel (1) ein Heizelement (2) umfasst, das so angeordnet ist, dass es die gesamte Oberfläche des Randes (12) der transparenten Kuppel (1) direkt berührt, um zumindest einen Teil der transparenten Kuppel (1) thermisch zu kontaktieren und die transparente Kuppel (1) durch Kontakt zu erwärmen, wobei das Pyranometer (10) ferner mindestens ein ringförmiges thermisch isolierendes Element (3) umfasst, das an einer Trägerstruktur (5) montiert und so angeordnet ist, dass es mindestens einen Teil des Heizelements (2) berührt, um den genannten mindestens einen Teil des Heizelements (2) thermisch zu isolieren, wobei das thermisch isolierende Element (3) eine innere seitliche Nut (30g) beinhaltet, die im Wesentlichen dem durch die transparente Kuppel definierten inneren geschlossenen Raum (14) zugewandt ist, und wobei das Pyranometer (10) ferner ein ringförmiges Montageelement (4) umfasst, wobei das Montageelement (4) einen vorstehenden Abschnitt (40) beinhaltet, der von einer äußeren Seitenfläche (41) des Montageelements (4) vorsteht, wobei die äußere Seitenfläche (41) im Wesentlichen von dem Montageelement (4) nach außen weist, und wobei das Montageelement (4) einen im Wesentlichen L-förmigen Querschnitt aufweist, und wobei der vorstehende Abschnitt (40) eine Form hat, die zu einer Form der inneren seitlichen Nut (30g) komplementär ist, sodass das Montageelement (4) am thermisch isolierenden Element (3) montiert ist, während das Heizelement (2) dazwischen eingeklemmt ist, wobei das Heizelement (2) zwischen dem thermisch isolierenden Element (3), dem Montageelement (4) und der transparenten Kuppel (1) eingefasst ist, sodass Wärme, die vom Heizelement (2) zur transparenten Kuppel (1) übertragen wird, nicht an die Trägerstruktur (5) übertragen wird.

2. Das Pyranometer (10) nach Anspruch 1, wobei das Heizelement (2) eine gedruckte Leiterplatte (PCB) umfasst.

3. Das Pyranometer (10) nach irgendeinem der vorstehenden Ansprüche, wobei das Heizelement (2) eine im Wesentlichen ringförmige Gesamtform aufweist und/oder wobei das Heizelement (2) mindestens ein Widerstandselement (23) umfasst.

4. Das Pyranometer (10) nach irgendeinem der vorstehenden Ansprüche, das ferner mindestens einen Sensor (104) zur Erfassung der Sonneneinstrahlung bzw. solaren Bestrahlungsstärke (*solar irradiance*) umfasst, wobei der Sensor (104) mittels des mindestens einen thermisch isolierenden Elements (3) von der transparenten Kuppel (1) und/oder dem Heizelement (2) thermisch entkoppelt ist.

5. Das Pyranometer (10) nach irgendeinem der vorstehenden Ansprüche, das ferner eine Steuerung (5) umfasst, wobei die Steuerung so konfiguriert ist, dass sie eine Heizleistung des Heizelements (2) steuert, wobei die Steuerung (5) so konfiguriert ist, dass sie die Heizleistung des Heizelements (2) auf der Grundlage einer vom Pyranometer (10) gemessenen Sonneneinstrahlung steuert, wobei die Steuerung (105) so konfiguriert ist, dass sie die Heizleistung des Heizelements (2) erhöht, wenn die von dem Pyranometer (100) gemessene Sonneneinstrahlung einen ersten spezifizierten Sonneneinstrahlungs-Schwellenwert (S1) überschreitet; und/oder wobei die Steuerung (105) so konfiguriert ist, dass sie die Heizleistung des Heizelements (2) verringert, wenn die vom Pyranometer (100) gemessene Sonneneinstrahlung einen zweiten spezifizierten Sonneneinstrahlungs-Schwellenwert (S2) überschreitet, wobei der erste spezifizierte Sonneneinstrahlungs-Schwellenwert (S1) gleich dem zweiten spezifizierten Sonneneinstrahlungs-Schwellenwert (S2) ist.

6. Das Pyranometer (100) nach irgendeinem der vorstehenden Ansprüche, wobei die Steuerung (105) so konfiguriert ist, dass sie einen Sonneneinstrahlungs-Offsetwert auf der Grundlage eines Steuerparameters des Heizelements (2) berechnet und dass sie eine vom Pyranometer (100) gemessene Sonneneinstrahlung auf der Grundlage eines berechneten Sonneneinstrahlungs-Offsetwertes modifiziert; wobei die Steuerung (105) so konfiguriert ist, dass sie den Sonneneinstrahlungs-Offsetwert auf der Grundlage des Regelparameters des Heizelements (2) berechnet, wenn die vom Pyranometer (10) gemessene Sonneneinstrahlung einen dritten spezifizierten Sonneneinstrahlungs-Schwellenwert (S3) überschreitet; und wobei die Steuerung (5) so konfiguriert ist, dass sie eine Sonneneinstrahlung auf der Grundlage eines berechneten Sonneneinstrahlungs-Offsetwerts modifiziert, wenn die vom Pyranometer (10) gemessene Sonneneinstrahlung einen vierten spezifizierten Sonneneinstrahlungs-Schwellenwert (S4) überschreitet.

7. Das Pyranometer (10) nach irgendeinem der vorstehenden Ansprüche, das ferner mindestens einen Temperatursensor (108) umfasst, der mit der Steuerung (105) wirkverbunden ist, wobei der Temperatursensor (108) so konfiguriert ist, dass er eine Temperatur der transparenten Kuppel (1) misst; wobei die Steuerung (5) so konfiguriert ist, dass sie einen Sonneneinstrahlungs-Offset auf der Grundlage der Temperatur der transparenten Kuppel (1) berechnet und eine vom Pyranometer (100) gemessene Sonneneinstrahlung auf der Grundlage des Sonneneinstrahlungs-Offsets modifiziert.

8. Das Pyranometer (10) nach irgendeinem der vorstehenden Ansprüche, das ferner einen Temperatursensor (108) umfasst, der mit der Steuerung (105) wirkverbunden ist, wobei der Temperatursensor (108) so konfiguriert ist, dass er eine Temperatur der transparenten Kuppel (1) misst; und wobei die Steuerung (5) so konfiguriert ist, dass sie die Heizleistung des Heizelements (2) so steuert, dass die gemessene Temperatur der transparenten Kuppel (1) eine spezifizierte Schwellentemperatur (T1) übersteigt, und/oder wobei die Steuerung (5) so konfiguriert ist, dass sie die Heizleistung des Heizelements (2) so steuert, dass eine gemessene Temperaturdifferenz zwischen der Temperatur der transparenten Kuppel (1) und einer von einem Sensor (104) zur Erfassung der Sonneneinstrahlung gemessenen Temperatur im Wesentlichen konstant bleibt.

9. Ein Verfahren zum Messen einer Sonneneinstrahlung bzw. solaren Bestrahlungsstärke (*solar irradiance*) mit einem Pyranometer (100), das eine transparente Kuppel (1) umfasst, wobei das Verfahren Folgendes umfasst: Erwärmen der transparenten Kuppel (1) mittels eines Heizelements (2), wobei das Heizelement (2) in direktem Kontakt mit der gesamten Oberfläche des Randes (12) der transparenten Kuppel (1) angeordnet ist, um zumindest einen Teil der transparenten Kuppel (1) thermisch zu kontaktieren und die transparente Kuppel (1) durch Kontakt zu erwärmen, wobei das Pyranometer (10) ferner mindestens ein ringförmiges thermisch isolierendes Element (3) umfasst, das an einer Trägerstruktur (5) montiert und so angeordnet ist, dass es mindestens einen Teil des Heizelements (2) berührt, um den genannten mindestens einen Teil des Heizelements (2) thermisch zu isolieren, wobei das thermisch isolierende Element (3) eine innere seitliche Nut (30g) beinhaltet, die im Wesentlichen dem durch die transparente Kuppel definierten inneren geschlossenen Raum (14) zugewandt ist, und wobei das Pyranometer (10) ferner ein ringförmiges Montageelement (4) umfasst, wobei das Montageelement (4) einen vorstehenden Abschnitt (40) beinhaltet, der von einer äußeren Seitenfläche (41) des Montageelements (4) vorsteht, wobei die äußere Seitenfläche (41) im Wesentlichen von dem Montageelement (4) nach außen weist, und wobei das Montageelement (4) einen im Wesentlichen L-förmigen Querschnitt aufweist, und wobei der vorstehende Abschnitt (40) eine Form hat, die komplementär zu einer Form der inneren seitlichen Nut (30g) ist, sodass das Montageelement (4) am thermisch isolierenden Element (3) montiert ist, während das Heizelement (2) dazwischen eingeklemmt ist, wobei das Heizelement (2) zwischen dem thermisch isolierenden Element (3), dem Montageelement (4) und der transparenten Kuppel (1) eingefasst ist, sodass Wärme, die vom Heizelement (2) zur transparenten Kuppel (1) übertragen wird, nicht an die Trägerstruktur (5) übertragen wird.

10. Das Verfahren zur Messung der Sonnenbestrahlungsstärke mit einem Pyranometer (100) nach Anspruch 9, das ferner Folgendes umfasst:
Messen einer Sonneneinstrahlung; und
Steuern der Heizleistung des Heizelements (2), wobei das Steuern der Heizleistung des Heizelements (2) auf einer durch das Pyranometer (10) gemessenen Sonneneinstrahlung basiert,
Erhöhen der Heizleistung des Heizelements (2), falls eine durch das Pyranometer (100) gemessene Sonneneinstrahlung einen ersten spezifizierten Sonneneinstrahlungs-Schwellenwert (S1) überschreitet; und/oder
Verringern der Heizleistung des Heizelements (2), falls die vom Pyranometer gemessene Sonneneinstrahlung einen zweiten spezifizierten Sonneneinstrahlungs-Schwellenwert (S2) überschreitet.

11. Das Verfahren zum Messen einer Sonneneinstrahlung mit einem Pyranometer (100) nach irgendeinem der Ansprüche von 9 bis 10, das ferner Folgendes umfasst:
Berechnen eines Sonneneinstrahlungs-Offsets auf der Grundlage eines Steuerparameters des Heizelements (2);
Modifizieren der Sonneneinstrahlung auf der Grundlage des berechneten Sonneneinstrahlungs-Offsets;
Berechnen eines Sonneneinstrahlungs-Offsets auf der Grundlage der Heizleistung des Heizelements (2), wenn eine vom Pyranometer (10) gemessene Sonneneinstrahlung einen dritten spezifizierten Sonneneinstrahlungs-Schwellenwert (S3) überschreitet; und
Modifizieren der Sonneneinstrahlung auf der Grundlage des berechneten Sonneneinstrahlungs-Offset-Signals, wenn eine vom Pyranometer (10) gemessene Sonneneinstrahlung einen spezifizierten vierten spezifizierten Sonneneinstrahlungs-Schwellenwert (S4) überschreitet.

12. Das Verfahren zur Messung der Sonneneinstrahlung mit einem Pyranometer (100) nach irgendeinem der Ansprüche von 9 bis 11, das ferner Folgendes umfasst:
Messen einer Temperatur der transparenten Kuppel (1);
Berechnen eines Offset-Wertes auf der Grundlage der Temperatur der transparenten Kuppel (1); und
Modifizieren einer Sonneneinstrahlung auf der Grundlage des Sonneneinstrahlungs-Offsets; oder Folgendes umfassend:
Messen einer Temperatur der transparenten Kuppel (1), und
Erwärmen der transparenten Kuppel (1), sodass
die gemessene Temperatur der transparenten Kuppel (1) einen bestimmten Temperatur-Schwellenwert (11) überschreitet; und/oder
eine Temperaturdifferenz zwischen der Temperatur der transparenten Kuppel (1) und einer von einem Sensor zur Erfassung der Sonneneinstrahlung (104) des Pyranometers (100) gemessenen Temperatur im Wesentlichen konstant bleibt.

## Revendications

1. Un pyranomètre (10) comprenant un dôme transparent (1), le dôme transparent (1) comprenant un élément chauffant (2) agencé pour entrer directement en contact avec la surface entière du bord (12) du dôme transparent (1) de manière à entrer en contact thermique avec au moins une partie du dôme transparent (1) et à chauffer le dôme transparent (1) par contact, le pyranomètre (10) comprenant en outre au moins un élément d'isolation thermique (3) de forme annulaire monté sur une structure de support (5) et agencé pour entrer en contact avec au moins une partie de l'élément chauffant (2) de manière à isoler thermiquement ladite au moins une partie de l'élément chauffant (2), l'élément d'isolation thermique (3) incluant une rainure latérale intérieure (30g) faisant essentiellement face à l'espace fermé intérieur (14) défini par le dôme transparent, et le pyranomètre (10) comprenant en outre un élément de montage (4) de forme annulaire, l'élément de montage (4) incluant une partie saillante (40) faisant saillie à partir d'une surface latérale extérieure (41) de l'élément de montage (4), la surface latérale extérieure (41) étant orientée essentiellement vers l'extérieur de l'élément de montage (4), et l'élément de montage (4) présentant une section transversale essentiellement en forme de L, et sachant que la partie saillante (40) a une forme qui est complémentaire à une forme de la rainure latérale intérieure (30g) de manière que l'élément de montage (4) est monté sur l'élément d'isolation thermique (3) tout en serrant l'élément chauffant (2) entre les deux, l'élément chauffant (2) étant enfermé entre l'élément d'isolation thermique (3), l'élément de montage (4) et le dôme transparent (1) de manière que la chaleur transférée de l'élément chauffant (2) au dôme transparent (1) n'est pas transférée à la structure de support (5).

2. Le pyranomètre (10) d'après la revendication 1, sachant que l'élément chauffant (2) comprend une carte de circuit imprimé (PCB).

3. Le pyranomètre (10) d'après l'une quelconque des revendications précédentes, sachant que l'élément chauffant (2) présente une forme globale essentiellement annulaire, et/ou sachant que l'élément chauffant (2) comprend au moins un élément résistif (23).

4. Le pyranomètre (10) d'après l'une quelconque des revendications précédentes, comprenant en outre au moins un capteur (104) pour détecter l'irradiance solaire, sachant que le capteur (104) est découplé thermiquement du dôme transparent (1) et/ou de l'élément chauffant (2) au moyen de l'au moins un élément d'isolation thermique (3).

5. Le pyranomètre (10) d'après l'une quelconque des revendications précédentes, comprenant en outre un dispositif de commande (5), sachant que le dispositif de commande est configuré pour commander une puissance de chauffage (*heating output*) de l'élément chauffant (2), sachant que le dispositif de commande (5) est configuré pour commander la puissance de chauffage de l'élément chauffant (2) sur la base d'une irradiance solaire mesurée par le pyranomètre (10), sachant que le dispositif de commande (105) est configuré pour augmenter la puissance de chauffage de l'élément chauffant (2) lorsque l'irradiance solaire mesurée par le pyranomètre (100) dépasse un premier seuil d'irradiance solaire spécifié (S1) ; et/ou sachant que le dispositif de commande (105) est configuré pour diminuer la puissance de chauffage de l'élément chauffant (2) lorsque l'irradiance solaire mesurée par le pyranomètre (100) dépasse un deuxième seuil d'irradiance solaire spécifié (S2), sachant que le premier seuil d'irradiance solaire spécifié (S1) est égal au deuxième seuil d'irradiance solaire spécifié (S2).

6. Le pyranomètre (10) d'après l'une quelconque des revendications précédentes, sachant que le dispositif de commande (105) est configuré pour calculer une valeur de décalage d'irradiance solaire sur la base d'un paramètre de commande de l'élément chauffant (2), et pour modifier une irradiance solaire mesurée par le pyranomètre (100), sur la base d'une valeur de décalage d'irradiance solaire calculée ; sachant que le dispositif de commande (105) est configuré pour calculer la valeur de décalage d'irradiance solaire sur la base du paramètre de commande de l'élément chauffant (2), lorsque l'irradiance solaire mesurée par le pyranomètre (10) dépasse un troisième seuil d'irradiance solaire spécifié (S3) ; et sachant que le dispositif de commande (5) est configuré pour modifier une irradiance solaire sur la base d'une valeur de décalage d'irradiance solaire calculée lorsque l'irradiance solaire est mesurée par le pyranomètre (10) dépasse un quatrième seuil d'irradiance solaire spécifié (S4).

7. Le pyranomètre (10) d'après l'une quelconque des revendications précédentes, comprenant en outre au moins un capteur de température (108) connecté de manière opérationnelle au dispositif de commande (105), sachant que le capteur de température (108) est configuré pour mesurer une température du dôme transparent (1) ; sachant que le dispositif de commande (5) est configuré pour calculer un décalage d'irradiance solaire sur la base de la température du dôme transparent (1), et pour modifier une irradiance solaire mesurée par le pyranomètre (100) sur la base du décalage d'irradiance solaire.

8. Le pyranomètre (10) d'après l'une quelconque des revendications précédentes, comprenant en outre un capteur de température (108) connecté de manière opérationnelle au dispositif de commande (105), sachant que le capteur de température (108) est configuré pour mesurer une température du dôme transparent (1) ; et sachant que le dispositif de commande (5) est configuré pour commander la puissance de chauffage de l'élément chauffant (2) de manière que la température mesurée du dôme transparent (1) dépasse une température seuil spécifiée (T1), et/ou sachant que le dispositif de commande (5) est configuré pour commander la puissance de chauffage de l'élément chauffant (2) de manière qu'une différence de température mesurée entre la température du dôme transparent (1) et une température mesurée par un capteur (104) de détection de l'irradiation solaire reste essentiellement constante.

9. Un procédé de mesure d'une irradiance solaire avec un pyranomètre (100) comprenant un dôme transparent (1), le procédé comprenant le fait de :
chauffer le dôme transparent (1) au moyen d'un élément chauffant (2), sachant que l'élément chauffant (2) est agencé directement en contact avec la surface entière du bord (12) du dôme transparent (1) de manière à contacter thermiquement au moins une partie du dôme transparent (1) et à chauffer le dôme transparent (1) par contact, le pyranomètre (10) comprenant en outre au moins un élément d'isolation thermique (3) de forme annulaire monté sur une structure de support (5) et agencé pour entrer en contact avec au moins une partie de l'élément chauffant (2) de manière à isoler thermiquement ladite au moins une partie de l'élément chauffant (2), l'élément d'isolation thermique (3) incluant une rainure latérale intérieure (30g) faisant essentiellement face à l'espace fermé intérieur (14) défini par le dôme transparent, et le pyranomètre (10) comprenant en outre un élément de montage (4) de forme annulaire, l'élément de montage (4) incluant une partie saillante (40) faisant saillie à partir d'une surface latérale extérieure (41) de l'élément de montage (4), la surface latérale extérieure (41) étant orientée essentiellement vers l'extérieur de l'élément de montage (4), et l'élément de montage (4) présentant une section transversale essentiellement en forme de L, et sachant que la partie saillante (40) a une forme qui est complémentaire à une forme de la rainure latérale intérieure (30g) de manière que l'élément de montage (4) est monté sur l'élément d'isolation thermique (3) tout en serrant l'élément chauffant (2) entre les deux, l'élément chauffant (2) étant enfermé entre l'élément d'isolation thermique (3), l'élément de montage (4) et le dôme transparent (1) de manière que la chaleur transférée de l'élément chauffant (2) au dôme transparent (1) n'est pas transférée à la structure de support (5).

10. Le procédé de mesure d'une irradiance solaire avec un pyranomètre (100) d'après la revendication 9, comprenant en outre le fait de :
mesurer l'irradiance solaire ; et de
commander la puissance de chauffage de l'élément chauffant (2), sachant que la commande de la puissance de chauffage de l'élément chauffant (2) est basée sur une irradiance solaire mesurée par le pyranomètre (10),
augmenter la puissance de chauffage de l'élément chauffant (2) si une irradiance solaire mesurée par le pyranomètre (100) dépasse un premier seuil d'irradiance solaire spécifié (S1) ; et/ou de
diminuer la puissance de chauffage de l'élément chauffant (2) si l'irradiation solaire est mesurée par le pyranomètre dépasse un deuxième seuil d'irradiation solaire spécifié (S2).

11. Le procédé de mesure d'une irradiance solaire avec un pyranomètre (100) d'après l'une quelconque des revendications de 9 à 10, comprenant en outre le fait de :
calculer un décalage d'irradiance solaire en fonction d'un paramètre de commande de l'élément chauffant (2) ;
modifier l'irradiance solaire sur la base du décalage d'irradiance solaire calculé ;
calculer un décalage d'irradiance solaire sur la base de la puissance de chauffage de l'élément chauffant (2) lorsqu'une irradiance solaire mesurée par le pyranomètre (10) dépasse un troisième seuil d'irradiance solaire spécifié (S3) ; et de
modifier l'irradiance solaire sur la base du signal de décalage d'irradiance solaire calculé lorsqu'une irradiance solaire mesurée par le pyranomètre (10) dépasse un quatrième seuil spécifié d'irradiance solaire spécifié (S4).

12. Le procédé de mesure d'une irradiance solaire avec un pyranomètre (100) d'après l'une quelconque des revendications de 9 à 11, comprenant en outre le fait de :
mesurer une température du dôme transparent (1) ;
calculer une valeur de décalage sur la base de la température du dôme transparent (1) ; et de
modifier l'irradiance solaire sur la base du décalage d'irradiance solaire ; ou
comprenant le fait de :
mesurer une température du dôme transparent (1), et
chauffer le chauffage du dôme transparent (1) de manière que
la température mesurée du dôme transparent (1) dépasse un seuil de température spécifié (11) ; et/ou que
une différence de température entre la température du dôme transparent (1) et une température mesurée par un capteur de détection de l'irradiation solaire (104) du pyranomètre (100) reste essentiellement constante.
